# EUROPEAN PATENT APPLICATION

(11) **EP 4 734 032 A1**
(43) Date of publication of application: **29.04.2026**
(21) Application number: 24836273.3
(22) Date of filing: 01.07.2024
(51) Int. Cl.: G06Q 30/06, G09F 3/20, G06F 40/186, H04W 12/80, H04W 4/80

(54) **METHOD, SYSTEM, AND USER TERMINAL FOR EDITING PRODUCT-RELATED INFORMATION DISPLAYED ON CUSTOMER CODE-BASED ELECTRONIC SHELF LABEL**

(30) Priority: 03.07.2023 KR 20230086124
(71) Applicant: SOLUM CO., LTD., Gyeonggi-do 16914 (KR)
(72) Inventor: KIM, Eojin, Suwon-si, Gyeonggi-do 16426 (KR); LEE, Seojin, Yongin-si, Gyeonggi-do 16914 (KR)
(74) Representative: South, Nicholas Geoffrey
(86) International application number: PCT/KR2024/009205
(87) International publication number: WO 2025/009825

(57) **Abstract**

One embodiment provides a method for editing product-related information displayed on an electronic shelf label, the method comprising the steps of: pairing the electronic shelf label with a first user terminal; transmitting a unique first customer code of the first user terminal from the first user terminal to the electronic shelf label; receiving, by the first user terminal, a first user input for editing product-related information; and transmitting data of the product-related information modified according to the first user input from the first user terminal to the electronic shelf label paired with the first user terminal.

## Description

### [Technical Field]

The present disclosure relates to a method, system, and user terminal for editing product-related information displayed on a customer code-based electronic shelf label.

### [Background Art]

Electronic labels are increasingly being used in applications such as displaying product information on products displayed in stores. Electronic labels, also known as electronic shelf labels or electronic tags, connect to a server via a gateway, receive product information to be displayed, and display the received product information on an electronic paper display. Electronic labels operate using low power and thus can extend battery lifespan, and have the ability to change display information over a communications network, which reduces store management labor costs, contributing to widespread adoption.

When a new product is placed on a shelf, a procedure of assigning an electronic label to display information on the product is required. Typically, when a store manager uses a terminal to read the barcode attached to the electronic label, then reads the product barcode and transmits the same to a server, the server assigns the electronic label to the product, registers the same in a database, and transmits the product information to the electronic label to process update of the display.

To modify product-related information displayed on such an electronic label, the server can generate product-related information to be displayed on the electronic label and transmit the same to the electronic label. However, in this case, the product-related information is edited by a server administrator. Therefore, on-site staff at the store where the product is displayed cannot directly edit the product-related information, and the product-related information cannot be efficiently modified depending on on-site circumstances, which may reduce the flexibility of editing the product-related information displayed on the electronic label.

Meanwhile, there is a technology for providing a product-related information editing environment through a user terminal based on pairing of the user terminal and an electronic label such that on-site staff at a store can modify product-related information displayed on electronic labels in real time. However, in this case, if any user terminal is indiscriminately paired with an electronic label and allowed to edit product-related information, this may lead to unauthorized editing of product-related information by unauthorized individuals, such as store customers or other store staff, other than staff authorized to edit product-related information at the store.

### [Disclosure]

### [Technical Problem]

According to various embodiments of the present disclosure, there are provided a method, system, and user terminal for editing product-related information displayed on a customer code-based electronic shelf label, which authorize a user terminal that has transmitted a customer code to an electronic shelf label to edit product-related information displayed on the electronic shelf label.

According to various embodiments of the present disclosure, there are provided a method, system, and user terminal for editing product-related information displayed on a customer code-based electronic shelf label, by which data regarding product-related information edited according to a user input through a button on the electronic shelf label is transmitted from a user terminal to the electronic shelf label in a state in which the user terminal and the electronic shelf label are paired based on a customer code.

However, the technical objects to be achieved by the various embodiments of the present disclosure are not limited to the technical objects described above, and other technical objects may exist.

### [Technical Solution]

One embodiment provides
a method for editing product-related information displayed on an electronic shelf label, including pairing a first user terminal with an electronic shelf label, transmitting a unique first customer code of the first user terminal to the electronic shelf label, receiving a first user input for editing product-related information by the first user terminal, and transmitting data regarding the product-related information modified according to the first user input from the first user terminal to the electronic shelf label paired with the first user terminal.

In another aspect, pairing of a second user terminal different from the first user terminal with the electronic shelf label may be blocked after the first customer code of the first user terminal is transmitted to the electronic shelf label.

In another aspect, reception of a unique second customer code of the second user terminal different from the first user terminal by the electronic shelf label may be blocked after the first customer code of the first user terminal is transmitted to the electronic shelf label.

In another aspect, data regarding product-related information modified according to a second user input received by the second user terminal different from the first user terminal may be blocked from being received by the electronic shelf label after the first customer code of the first user terminal is transmitted to the electronic shelf label.

In another aspect, the method for editing product-related information displayed on an electronic shelf label may further include receiving, by the electronic shelf label, a pairing cancelation signal for canceling pairing with the electronic shelf label from the first user terminal, and deleting the first customer code from the electronic shelf label.

In another aspect, the method for editing product-related information displayed on an electronic shelf label may further include pairing the second user terminal with the electronic shelf label after the first customer code is deleted from the electronic shelf label, transmitting a unique second customer code of the second user terminal to the electronic shelf label from the second user terminal, receiving a second user input for editing product-related information by the second user terminal, and transmitting data regarding the product-related information modified according to the second user input from the second user terminal to the electronic shelf label paired with the second user terminal.

In another aspect, the paring a first user terminal with an electronic shelf label may include pairing the first user terminal with the electronic shelf label by transmitting a pairing signal according to a user input through a button on the electronic shelf label from the electronic shelf label to the first user terminal.

In another aspect, the transmitting data regarding the product-related information modified according to the first user input to the electronic shelf label may include transmitting the data regarding the product-related information from the first user terminal to the electronic shelf label according to a user input through a button on the electronic shelf label.

In another aspect, the receiving a first user input by the first user terminal may include displaying a template editing UI by the first user terminal, and receiving the first user input through the template editing UI by the first user terminal and applying information according to the first user input to the template editing UI.

In another aspect, the pairing a first user terminal with an electronic shelf label may include pairing the first user terminal with different first and second electronic shelf labels, respectively, and the transmitting a first customer code from the first user terminal to the electronic shelf label may include transmitting the first customer code from the first user terminal to the first and second electronic shelf labels.

In another aspect, the receiving a first user input by the first user terminal may include receiving a (1-1)-th user input for editing information related to a first product assigned to the first electronic shelf label and a (1-2)-th user input for editing information related to a second product different from the first product and assigned to the second electronic shelf label.

In another aspect, the transmitting product-related information modified according to the first user input to the electronic shelf label may include transmitting data regarding information related to the first product modified according to the (1-1)-th user input from the first user terminal to the first electronic shelf label, and transmitting data regarding information related to the second product modified according to the (1-2)-th user input to the second electronic shelf label.

In another aspect, the transmitting data regarding product-related information modified according to the first user input to the electronic shelf label may include transmitting the data regarding the information related to the first product from the first user terminal to the first electronic shelf label according to a user input through a button on the first electronic shelf label, and transmitting the data regarding the information related to the second product from the first user terminal to the second electronic shelf label according to a user input through a button on the second electronic shelf label.

One embodiment provides
a system including an electronic shelf label provided on a shelf on which products are displayed and including a button, and a first user terminal including a memory in which a program for performing a method for editing product-related information displayed on the electronic shelf label is stored, and a processor for executing the program.

The method for editing product-related information displayed on the electronic shelf label may include pairing the first user terminal with the electronic shelf label, transmitting a unique first customer code of the first user terminal to the electronic shelf label from the first user terminal, receiving a first user input for editing product-related information by the first user terminal, and transmitting data regarding product-related information modified according to the first user input from the first user terminal to the electronic shelf label paired with the first user terminal.

In an aspect, after the first customer code of the first user terminal is transmitted to the electronic shelf label, pairing of a second user terminal different from the first user terminal with the electronic shelf label may be blocked, a unique second customer code of the second user terminal may be blocked from being received by the electronic shelf label, or data regarding product-related information modified according to a second user input received by the second user terminal may be blocked from being received by the electronic shelf label.

One embodiment provides
a user terminal including a memory in which a program for performing a method for editing product-related information displayed on an electronic shelf label is stored, and a processor for executing the program.

The method for editing product-related information displayed on an electronic shelf label may include pairing the user terminal with the electronic shelf label, transmitting a unique customer code of the user terminal from the user terminal to the electronic shelf label, receiving a user input for editing product-related information by the user terminal, and transmitting data regarding product-related information modified according to the user input from the user terminal to the electronic shelf label paired with the user terminal.

### [Advantageous Effects]

According to various embodiments of the present disclosure, it is possible to provide a method, system, and user terminal for editing product-related information displayed on a customer code-based electronic shelf label with enhanced security by authorizing a user terminal that has transmitted a customer code to an electronic shelf label to edit product-related information displayed on the electronic shelf label, and preventing other user terminals that have not transmitted customer codes to the electronic shelf label from editing the product-related information displayed on the electronic shelf label.

According to various embodiments of the present disclosure, it is possible to provide a method, system, and user terminal for editing product-related information displayed on a customer code-based electronic shelf label by causing data regarding edited product-related information to be transmitted from a user terminal to an electronic shelf label in response to a user input via a button on the electronic shelf label in a state in which the user terminal and the electronic shelf label are paired based on a customer code, thereby rapidly transmitting the edited product-related information from the user terminal to the electronic shelf label without requiring additional user input for transmitting the product-related information data from the user terminal.

However, the effects that can be obtained through various embodiments of the present disclosure are not limited to the effects mentioned above, and other effects that are not mentioned can be clearly understood from the description below.

### [Description of Drawings]

FIG. 1 illustrates an exemplary configuration of a system for editing product-related information displayed on an electronic shelf label according to an embodiment.
FIG. 2 is a block diagram illustrating an exemplary configuration of a server according to an embodiment.
FIG. 3 is a block diagram illustrating an exemplary configuration of a computing device according to an embodiment.
FIG. 4 illustrates an exemplary configuration of an electronic shelf label according to an embodiment.
FIG. 5 is a flowchart of a method for editing product-related information displayed on an electronic shelf label according to an embodiment.
FIG. 6 illustrates a process of pairing a first user terminal and an electronic shelf label and transmitting/receiving a first customer code therebetween according to an embodiment.
FIG. 7 is a flowchart illustrating a step of receiving a first user input for editing product-related information included in the method illustrated in FIG. 5.
FIG. 8 illustrates a configuration of a template editing UI according to an embodiment.
FIG. 9 illustrates a process of transmitting/receiving product data between a user terminal and an electronic shelf label according to an embodiment.
FIG. 10 illustrates a user input interface for canceling pairing of an electronic shelf label, displayed on the first user terminal paired with the electronic shelf label according to an embodiment.
FIG. 11 illustrates a process of pairing a second user terminal and an electronic shelf label and transmitting/receiving a second customer code therebetween according to another embodiment.
FIG. 12 illustrates a process of pairing the first user terminal and a plurality of electronic shelf labels and transmitting/receiving a first customer code therebetween according to an embodiment.
FIG. 13 illustrates a process of transmitting/receiving product data between the first user terminal and the electronic shelf labels according to an embodiment.

### [Mode for Invention]

The present disclosure is capable of various modifications and embodiments, and therefore, specific embodiments are illustrated in the drawings and described in detail in the detailed description. The effects and features of the present disclosure, and methods for achieving the same will become clear with reference to the embodiments described in detail below together with the drawings. However, the present disclosure is not limited to the embodiments disclosed below and can be implemented in various forms. In the following embodiments, the terms "first," "second," etc. are not used in a limiting sense but are used for the purpose of distinguishing one component from another. Furthermore, the singular expression includes the plural expression unless the context clearly indicates otherwise. Furthermore, terms such as "include" and "have" indicate the presence of a feature or a component described in the specification, and do not preemptively exclude the possibility that one or more other features or components may be added. Furthermore, the sizes of components in the drawings may be exaggerated or reduced for convenience of explanation. For example, the size and thickness of each component are arbitrarily shown in the drawings for convenience of explanation, and thus the present disclosure is not necessarily limited to what is shown.

Hereinafter, embodiments of the present disclosure will be described in detail with reference to the attached drawings. When describing with reference to the drawings, identical or corresponding components are denoted by the same reference numerals, and redundant descriptions thereof will be omitted.

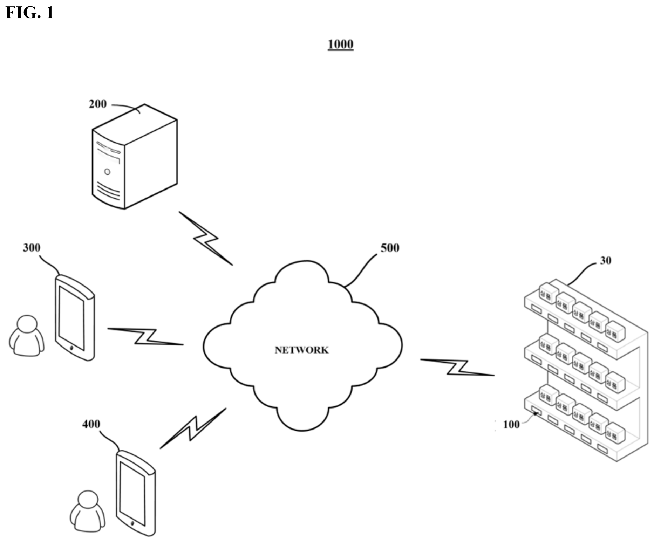

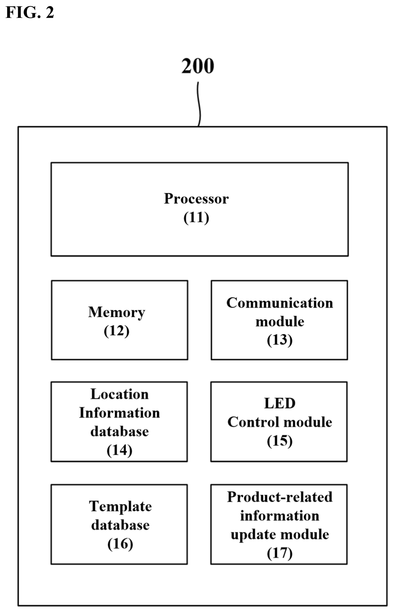

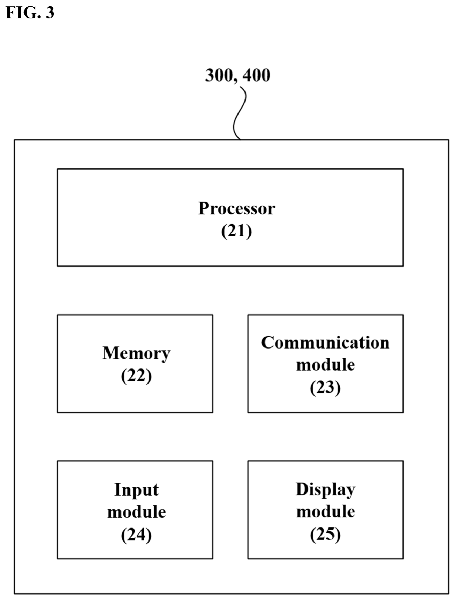

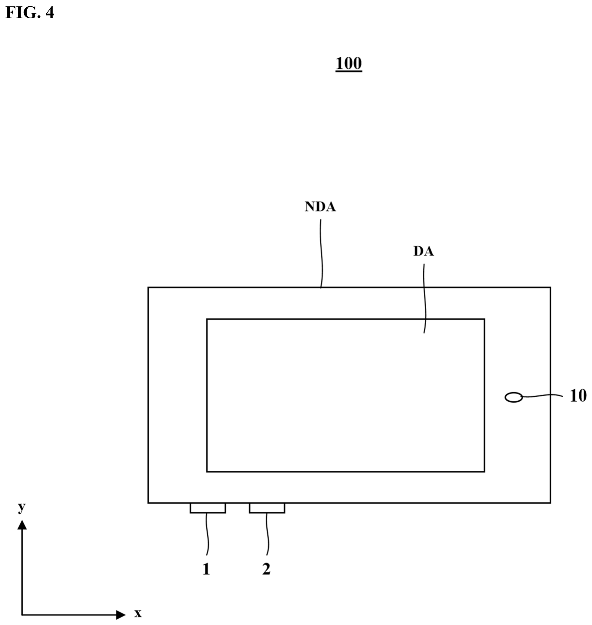

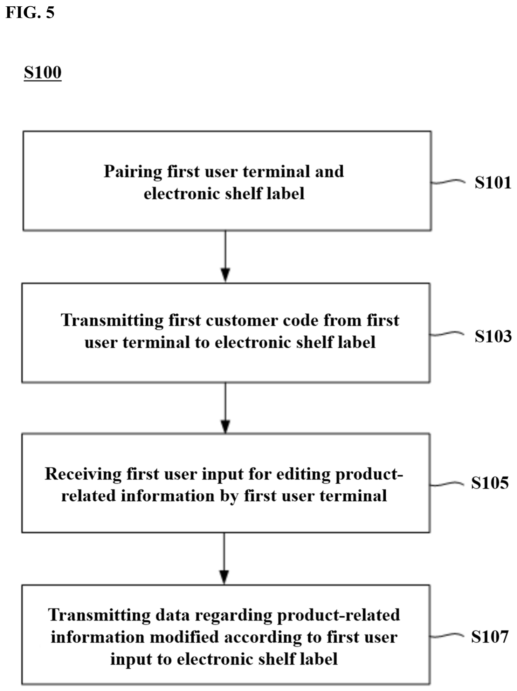

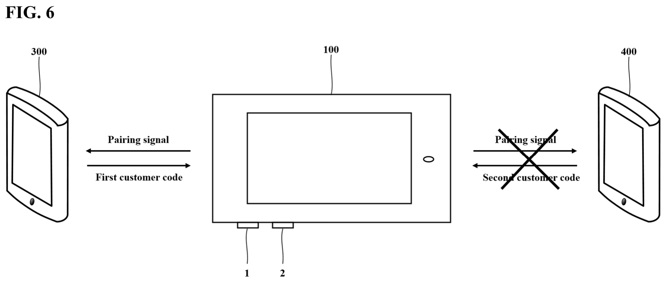

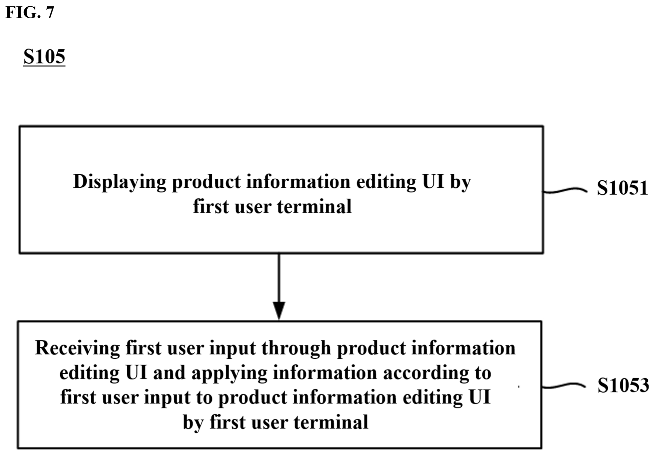

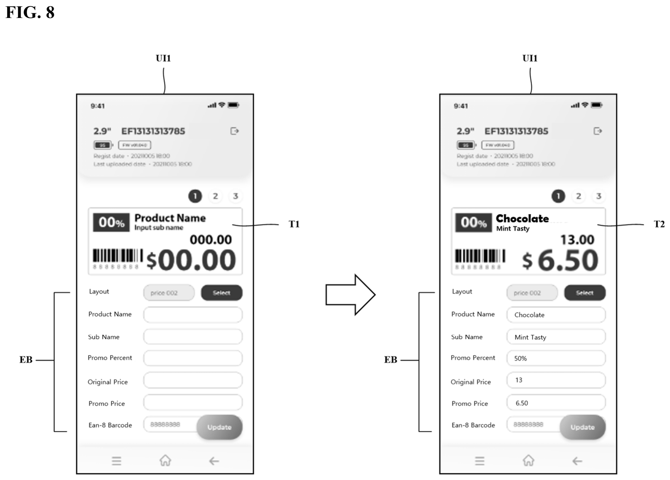

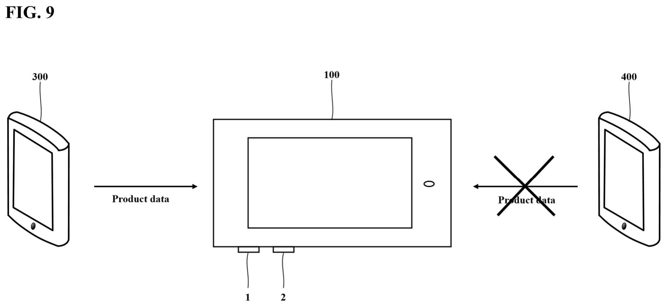

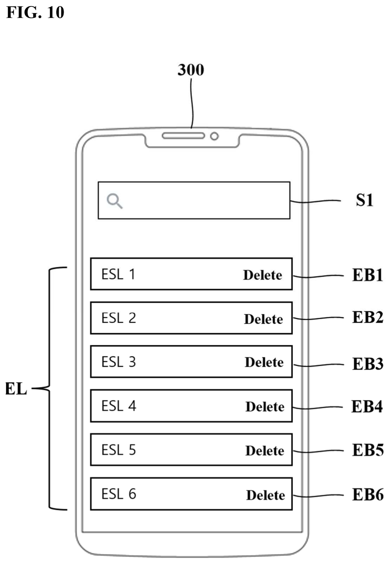

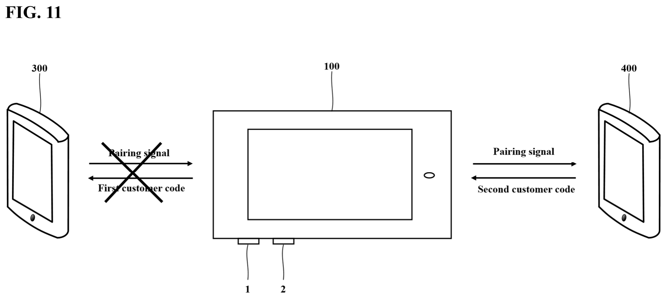

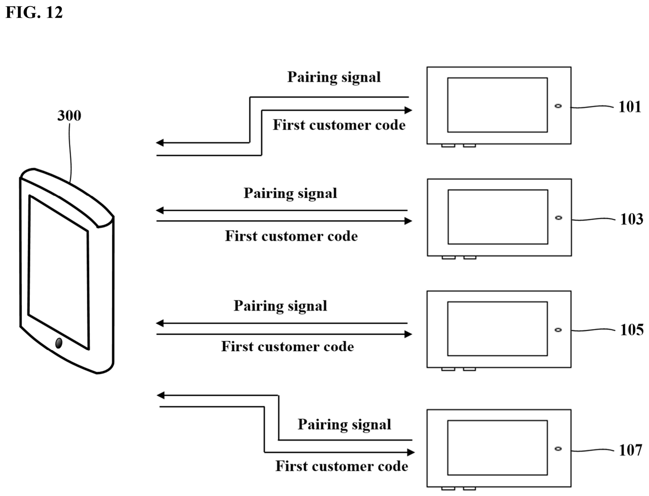

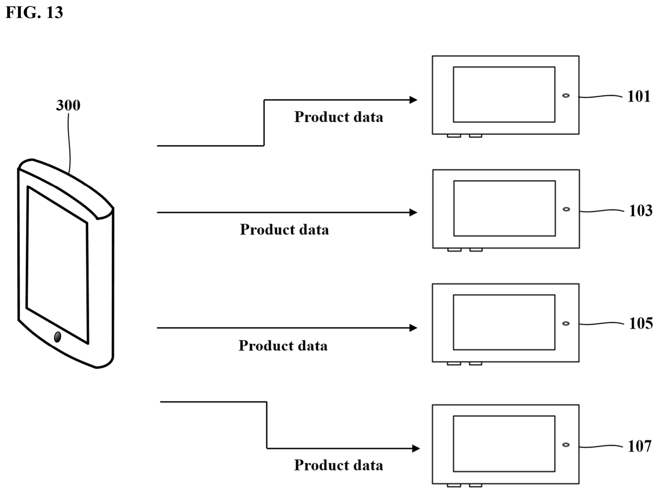

FIG. 1 illustrates an exemplary configuration of a system 1000 for editing product-related information displayed on an electronic shelf label 100 according to an embodiment. FIG. 2 is a block diagram illustrating an exemplary configuration of a server 200 according to an embodiment. FIG. 3 is a block diagram illustrating an exemplary configuration of a computing device 300/400 according to an embodiment. FIG. 4 illustrates an exemplary configuration of the electronic shelf label 100 according to an embodiment. FIG. 5 is a flowchart of a method S100 for editing product-related information displayed on the electronic shelf label 100 according to an embodiment. FIG. 6 illustrates process of pairing a first user terminal 300 and the electronic shelf label 100 and transmitting/receiving a first customer code therebetween according to an embodiment. FIG. 7 is a flowchart illustrating step S101 of receiving a first user input for editing product-related information included in the method S 100 in FIG. 5. FIG. 8 illustrates a configuration of a template editing UI UI1 according to an embodiment. FIG. 9 illustrates a process of transmitting/receiving product data between user terminals 300 and 400 and the electronic shelf label 100 according to an embodiment. FIG. 10 illustrates a user input interface for canceling pairing of the electronic shelf label 100, displayed on the first user terminal 300 paired with the electronic shelf label 100 according to an embodiment. FIG. 11 illustrates a process of pairing the second user terminal 400 and the electronic shelf label 100 and transmitting/receiving a second customer code therebetween according to another embodiment. FIG. 12 illustrates a process of pairing the first user terminal 300 and a plurality of electronic shelf labels 101, 103, 105, and 107 and transmitting/receiving the first customer code therebetween according to an embodiment. FIG. 13 illustrates a process of transmitting/receiving product data between the first user terminal 300 and the plurality of electronic shelf labels 101, 103, 105, and 107 according to an embodiment.

### - System 1000

Referring to FIG. 1, the system 1000 for editing product-related information displayed on an electronic shelf label 100 according to an embodiment can provide an environment in which store staff can rapidly and efficiently modify product-related information displayed on the electronic shelf label 100 using user terminals 300 and 400.

The system 1000 may include electronic shelf labels 100 provided on shelves 30, a server 200, and computing devices 300 and 400. The computing devices 300 and 400 may include a portable user terminal.

The electronic shelf labels 100 included in the system 1000 may be linked to the server 200, and product-related information displayed on the electronic shelf labels 100 may be updated by the server 200. Data regarding updated product-related information is transmitted from the server 200 to an electronic shelf label 100, and the electronic shelf label 100 may display the updated product-related information. In this case, the server 200 may update the product-related information based on user input via the computing devices 300 and 400.

For example, a plurality of electronic shelf labels 100 and a plurality of products may be provided on the shelves 30. Each of the products may be assigned to each of the electronic shelf labels 100. A first product may be assigned to any first electronic shelf label among the plurality of electronic shelf labels 100, and a second product, different from the first product, may be assigned to any second electronic shelf label. The first electronic shelf label and the first product may be provided adjacent to each other, and the second electronic shelf label and the second product may be provided adjacent to each other.

The server 200 may update information related to the plurality of products assigned to the plurality of electronic shelf labels 100. The server 200 may collectively update the information related to the plurality of products and transmit the updated information related to the plurality of products to the plurality of electronic shelf labels 100. For example, the server 200 can update information related to any first product among the plurality of products and transmit the updated information related to the first product to the first electronic shelf label to which the first product is assigned. In addition, the server 200 can update information related to any second product among the plurality of products and transmit the updated information related to the second product to the second electronic shelf label to which the second product is assigned.

The electronic shelf labels 100, the server 200, and the computing devices 300 and 400 may be connected to each other via a network 500. Here, the network 500 according to the embodiment may refer to a connection structure that enables information exchange between nodes, such as the electronic shelf labels 100, the server 200, and the computing devices 300 and 400.

For example, the network 500 may include, but is not limited to, a 3rd Generation Partnership Project (3GPP) network, a Long Term Evolution (LTE) network, a World Interoperability for Microwave Access (WIMAX) network, the Internet, a Local Area Network (LAN), a Wireless LAN, a Wide Area Network (WAN), a Personal Area Network (PAN), a Bluetooth network, a satellite broadcasting network, an analog broadcasting network, a Digital Multimedia Broadcasting (DMB) network, and the like.

The electronic shelf labels 100 may be wirelessly connected to the server 200 through a separate gateway (not shown). However, the present disclosure is not limited thereto, and the electronic shelf labels 100 may be connected to the computing devices 300 and 400 via wireless communication. For example, the electronic shelf label 100 may be paired with the computing device 300/400 based on a Bluetooth function.

The electronic shelf label 100 may be an electronic device mounted on the shelf 30 to display information related to a product displayed on the shelf 30. For example, the electronic shelf label 100 may display information related to the product, such as the Korean product name, English product name, country of origin, product price, raw materials, and weight/calories.

The electronic shelf label 100 may include an electronic paper display (EPD), which maintains a product information display state even when power is not supplied. Due to bistability, which allows the electronic paper display to maintain a display state for a long period of time even when power supply is interrupted, the electronic paper display is suitable for the electronic shelf label 100 that requires reduced power consumption. Known electronic paper displays include a twist ball type using hemispherical twist balls charged with electrostatic charge, an electrophoretic display using electrophoresis and microcapsules, and a cholesterol liquid crystal display using cholesterol liquid crystals.

However, the present disclosure is not limited thereto, and the electronic shelf label 100 may include any one of a liquid crystal display (LCD), a thin film transistor-liquid crystal display (TFT LCD), an organic light-emitting diode (OLED), a flexible display, and a 3D display.

Referring to FIG. 4, the electronic shelf label 100 may include a display area DA on the front surface that displays product-related information, and a non-display area NDA where product-related information is not displayed. The non-display area NDA may be an area surrounding the display area DA.

Furthermore, the electronic shelf label 100 may include at least one button 1 and 2 and an LED 10. For example, the LED 10 may be provided in the non-display area NDA.

The LED 10 may be controlled based on a signal from the server 200 or the computing devices 300 and 400. Furthermore, the LED 10 may emit light in various colors. For example, the LED 10 may emit light in various colors, such as blue, red, green, yellow, sky blue, gray, and white.

The at least one button 1 and 2 may be provided on a portion of the side of the electronic shelf label 100. However, the present disclosure is not limited thereto, and the at least one button 1 and 2 may also be provided on the front or back surface of the electronic shelf label 100.

A pairing signal may be transmitted from the electronic shelf label 100 to the computing device 300/400 based on a user input via the at least one button 1 and 2. Accordingly, the electronic shelf label 100 may be paired with the computing device 300/400 using Bluetooth. For example, when a user presses the at least one button 1 and 2, a pairing signal is transmitted from the electronic shelf label 100 to the computing device 300/400, and the electronic shelf label 100 may be paired with the computing device 300/400 using the Bluetooth function.

The server 200 may update information related to a product assigned to the electronic shelf label 100 provided on the shelf 30 and transmit the updated product-related information to the electronic shelf label 100. In this case, the server 200 may update the product-related information based on user input received via the computing device 300/400.

Specifically, to update the information related to the product assigned to the electronic shelf label 100, the server 200 may exchange necessary data with the electronic shelf label 100 and the computing devices 300 and 400. Accordingly, the server 200 may provide an environment necessary for updating the product-related information.

For example, the server 200 may provide an environment in which product-related information can be updated using the computing devices 300 and 400 (e.g., a portable user terminal-type computing device, a desktop-type computing device, and the like). The server 200 may include an application program, data and/or instructions for operating a product-related information update application, and may transmit data based thereon to the computing devices 300 and 400.

Additionally, the server 200 may provide a customer code to the computing devices 300 and 400. The server 200 may provide a customer code for authorizing the computing devices 300 and 400 that have registered as members through a product-related information editing application to update product-related information to the computing devices 300 and 400. For example, a store customer or on-site staff may receive a product-related information update service by using the computing devices 300 and 400 that have received a customer code.

Referring to FIG. 2, the server 200 may be implemented as a computing device including at least one processor 11 for data processing, a memory 12 in which application programs, data, and/or instructions are stored, at least one communication module 13 for data exchange with external devices, a location information database 14 in which location information of the electronic shelf labels 100 are stored, an LED control module 15 for controlling the operation of the LED 10 of the electronic shelf label 100, a template database 16 in which templates containing product-related information are stored, and a product-related information update module 17 for updating product-related information.

The processor 11 may control the overall operation of components included in the server 200 to provide an environment in which a product-related information editing application can operate in the computing devices 300 and 400.

The processor 11 may be a system-on-chip (SoC) including a central processing unit (CPU) and/or a graphics processing unit (GPU), and may execute an operating system (OS) and/or application programs stored in the memory 12.

In addition, the processor 11 may communicate internally with each component included in the server 200 via a system bus, and may include one or more predetermined bus structures, including a local bus.

In addition, the processor 11 may be implemented using at least one of application specific integrated circuits (ASICs), digital signal processors (DSPs), digital signal processing devices (DSPDs), programmable logic devices (PLDs), field programmable gate arrays (FPGAs), controllers, microcontrollers, microprocessors, and other electrical units for performing functions.

The memory 12 may store one or more of an operating system (OS), various application programs, data, and instructions for providing an environment necessary to perform a method of editing product-related information.

Furthermore, the memory 12 may include a program area and a data area. Here, the program area according to an embodiment may be linked between the operating system (OS) that boots the server 200 and functional elements, and the data area may store data generated when the server 200 is used.

In an embodiment, the memory 12 may be various storage devices such as a ROM, a RAM, an EPROM, a flash drive, and a hard drive, or may be web storage that performs a storage function over the Internet. Furthermore, the memory 12 may be a storage medium that is removable from the server 200.

The communication module 13 may include various types of communication devices that enable the server 200 to transmit/receive data to/from external devices. The server 200 can transmit data based on application programs, data, and/or instructions for operation of the product-related information editing application to the computing devices 300 and 400 via the communication module 13.

The location information database 14 may store location information of the electronic shelf labels 100. The plurality of electronic shelf labels 100 may be provided on the shelves 30 to correspond to a plurality of products. These electronic shelf labels 100 may be placed at specific locations on the shelves 30, and specific location information of the plurality of electronic shelf labels 100 with respect to the shelves 30 may be stored in the location information database 14.

For example, among the plurality of electronic shelf labels 100, a first electronic shelf label can be provided on the third row of the second column of the first shelf provided in Zone A among a plurality of zones. In this case, the location information of the first electronic shelf label, "Second column, third row of the first shelf in Zone A", can be stored in the location information database 14 as the location information of the first electronic shelf label in association with the unique identification number of the first electronic shelf label.

The LED control module 15
may control lighting of the LEDs included in the electronic shelf labels 100 based on signals from the computing devices 300 and 400. For example, a first user input for selecting a first product among a plurality of products may be received through the computing device 300/400. Based on the first user input, a first signal may be transmitted from the computing device 300/400 to the server 200. The server 200 may receive the first signal via the communication module 13, and the first signal may be transmitted to the LED control module 15. The LED control module 15 may control the operation of the first LED of the first electronic shelf label to which the first product is assigned such that the first LED of the first electronic shelf label is turned on based on the first signal.

The template database 16 may be a database that stores templates to which product-related information is applied. For example, the template database 16 may store data regarding a plurality of templates to which product-related information can be input. The plurality of templates may have different forms depending on user input. For example, the plurality of templates may be generated by user input applied by a store's middle manager to the computing devices 300 and 400. The middle manager may create a template in a desired form via the computing devices 300 and 400. The computing devices 300 and 400 may transmit data regarding a plurality of templates to the server 200, and the data regarding the plurality of templates may be stored in the template database 16. However, the present disclosure is not limited thereto, and the template database 16 may store data regarding a plurality of previously created templates.

The product-related information update module 17 may update product-related information displayed on the electronic shelf label 100. For example, the product-related information update module 17 may control the electronic shelf label 100 such that product-related information displayed on the electronic shelf label 100 is periodically updated according to a product-related information update rule stored in the memory 12. The product-related information update rule stored in the memory 12 may be predetermined by the user and constantly modified.

However, the present disclosure is not limited thereto, and the product-related information update module 17 may control the electronic shelf label 100 such that the product-related information displayed on the electronic shelf label 100 is updated according to user input for editing the product-related information. For example, the product-related information update module 17 may control the electronic shelf label 100 such that product-related information updated according user input to a template provided from the template database 16 is displayed on the electronic shelf label 100.

Although the server 200 according to an embodiment performs the functional operations described above in the above description, at least some of the functional operations performed by the server 200 may be performed by an external device (e.g., computing devices 300 and 400), or at least some of functional operations performed by the external device may be further performed by the server 200 in various embodiments.

The computing devices 300 and 400 may be devices in which the product-related information editing application is installed. The computing devices 300 and 400 may include portable user terminals. The computing devices 300 and 400 may be divided into a first computing device 300 and a second computing device 400 according to the user.

For example, the user of the first computing device 300 may be store staff, and the user of the second computing device 400 may be a store customer or another store staff. The first computing device 300 and the second computing device 400 may have substantially the same structure. Hereinafter, the first computing device 300 may be referred to as a first user terminal, and the second computing device 400 may be referred to as a second user terminal.

The computing devices 300 and 400 may be implemented as, for example, computers or portable terminals that can access the server 200 via the network 500. Here, computers may include, for example, a notebook, desktop, laptop, VR HMD (e.g., HTC VIVE, Oculus Rift, GearVR, DayDream, PSVR, etc.) equipped with a web browser. Here, the VR HMD includes all of models for PCs (e.g., HTC VIVE, Oculus Rift, FOVE, Deepon, etc.), models for mobile (e.g., GearVR, DayDream, Storm Magic, Google Cardboard, etc.), models for consoles (PSVR), and stand-alone models (e.g., Deepon, PICO, etc.) that are implemented independently. Portable terminals are wireless communication devices that ensure portability and mobility, and may include, for example, smartphones, tablet PCs, wearable devices, and various devices equipped with communication modules such as Bluetooth Low Energy (BLE), NFC, RFID, ultrasonic, infrared, Wi-Fi, and LiFi.

Referring to FIG. 3, Each of the computing devices 300 and 400 may include a processor 21, a memory 22, a communication module 23, an input module 24, and a display module 25. Various components included in the computing devices 300 and 400 may be designed to be included within the housings of the computing devices 300 and 400.

In an embodiment, the processor 21 may control the overall operation of the components included in the computing devices 300 and 400 through the product-related information editing application in the memory 22 to provide an environment for editing product-related information.

For example, the processor 21 can control the operations of the communication module 23 and the input module 24 such that a signal according to a user input received through the input module 24 can be transmitted to the electronic shelf label 100 through the communication module 23.

The processor 21 may include a central processing unit (CPU) and/or a graphics processing unit (GPU). Additionally, the processor 21 may include at least one of application specific integrated circuits (ASICs), digital signal processors (DSPs), digital signal processing devices (DSPDs), programmable logic devices (PLDs), field programmable gate arrays (FPGAs), controllers, microcontrollers, microprocessors, and other electrical units for performing functions.

The memory 22 may store instructions and data that can be used to create a product-related information editing environment. The product-related information editing application may be stored in the memory 22. The product-related information editing application may provide various types of user interfaces for providing a product-related information editing environment.

The memory 22 may include at least one non-transitory computer-readable storage medium and temporary computer-readable storage medium. For example, the memory 22 may be a variety of storage devices, such as a ROM, an EPROM, a flash drive, and a hard drive. Furthermore, the memory 22 may include web storage that performs a data storage function on the Internet.

The communication module 23 may include various types of communication devices that enable data transmission/reception to/from external devices. For example, the communication module 23 may transmit/receive data to/from the electronic shelf label 100 and/or the server 200 via a wireless network.

The communication module 23 may wirelessly transmit/receive data to/from at least one of a base station, an external terminal, or an arbitrary server over a mobile communication network constructed using communication devices capable of performing technical standards or communication methods for mobile communication (e.g., Long Term Evolution (LTE), Long Term Evolution-Advanced (LTE-A), 5G NR (New Radio), and Wi-Fi) or short-range communication methods.

Additionally, the communication module 23 may be configured to transmit/receive data to/from an external electronic device using Bluetooth. For example, the communication module 23 may receive a pairing signal from the electronic shelf label 100 and pair with the electronic shelf label 100 using Bluetooth.

The input module 24 may be configured to receive various types of user input from users using the computing devices 300 and 400. For example, the input module 24 may include a touch screen that receives a user's touch input. If the input module 24 is implemented as a touch screen, the input module 24 may be integrated with the display module 25. However, the present disclosure is not limited thereto, and the input module 24 may further include a keyboard capable of receiving user input in the form of characters.

The display module 25 may display the product-related information update application stored in the memory 22. For example, the display module 25 may include a display device that displays various types of user interface (UI) images for providing a product-related information update environment.

The display module 25 may include any one of a liquid crystal display (LCD), a thin film transistor-liquid crystal display (TFT LCD), an organic light-emitting diode (OLED), a flexible display, and a 3D display.

### - Methods S100 and S200 for Editing Product-Related Information Displayed on Electronic Shelf Label

Hereinafter, methods for editing product-related information displayed on an electronic shelf label 100 using the product-related information editing application executed by the processor 21 of the computing devices 300 and 400 according to various embodiments will be described in detail with reference to FIG. 5 to FIG. 13.

In various embodiments, the processor 21 of the computing devices 300 and 400 may execute the product-related information editing application stored in the memory 22 or operate the same in the background.

Although the processor 21 of the computing devices 300 and 400 operates to execute instructions of the product-related information editing application to provide an environment necessary to perform the above-described methods of editing product-related information, for convenience of explanation, the product-related information editing application performs the methods instead of the processor 21 of the computing devices 300 and 400 in the following description.

In addition, for convenience of explanation, the computing devices 300 and 400 are referred to as user terminals in the following description.

FIG. 5 is a flowchart of a method S100 for editing product-related information displayed on an electronic shelf label 100 according to an embodiment.

Referring to FIG. 5, the method S100 for editing product-related information may include step S101 in which the first user terminal 300 and the electronic shelf label 100 are paired, step S103 in which a unique first customer code of the first user terminal 300 is transmitted from the first user terminal 300 to the electronic shelf label 100, step S105 in which the first user terminal 300 receives a first user input for editing product-related information, and step S107 in which data regarding product-related information modified according to the first user input is transmitted from the first user terminal 300 to the electronic shelf label 100 paired with the first user terminal 300.

Referring to FIG. 6, in step S101 in which the first user terminal 300 and the electronic shelf label 100 are paired, when the user presses the first button 1 and/or the second button 2 included in the electronic shelf label 100, a pairing signal is transmitted from the electronic shelf label 100 to the first user terminal 300, and the electronic shelf label 100 can be paired with the first user terminal 300 based on the Bluetooth function. Here, the user using the first user terminal 300 may be a store staff or a store manager.

For example, in step S101, when the product-related information editing application is executed in the first user terminal 300, and the user presses the first button 1 and/or the second button 2 included in the electronic shelf label 100, the first user terminal 300 and the electronic shelf label 100 can be paired with each other.

Referring to FIG. 6, in step S103 in which the first customer code is transmitted to the electronic shelf label 100, information data of the first customer code stored in the memory 22 of the first user terminal 300 may be transmitted to the electronic shelf label 100.

For example, when the first user terminal 300 is paired with the electronic shelf label 100 in step S101, the information data of the first customer code may be automatically transmitted from the first user terminal 300 to the electronic shelf label 100. Steps S103 and S101 may be performed substantially simultaneously.

The first customer code may be a code for authorizing the user to update product-related information provided to the first user terminal 300 by the server 200 when the user registers for membership through the product-related information editing application provided by the first user terminal 300. The first customer code may be a code that corresponds one-to-one to the first user terminal 300.

The information data of the first customer code transmitted from the first user terminal 300 to the electronic shelf label 100 may be stored in the memory included in the electronic shelf label 100. The first customer code may remain stored in the memory of the electronic shelf label 100 until deleted.

After the first customer code of the first user terminal 300 is transmitted to the electronic shelf label 100, pairing between the second user terminal 400 different from the first user terminal 300 and the electronic shelf label 100 may be blocked. For example, referring to FIG. 6, when the electronic shelf label 100 receives the first customer code from the first user terminal 300, even if another user presses the first button 1 and/or the second button 2 of the second user terminal 400, the electronic shelf label 100 may not receive a pairing signal from the second user terminal 400.

Furthermore, after the first customer code of the first user terminal 300 is transmitted to the electronic shelf label 100, reception of a unique second customer code of the second user terminal 400 by the electronic shelf label 100 may be blocked. For example, referring to FIG. 6, when the electronic shelf label 100 receives the first customer code from the first user terminal 300, even if another user presses the first button 1 and/or the second button 2 of the second user terminal 400, the electronic shelf label 100 may not receive the second customer code from the second user terminal 400.

In this manner, when the first customer code from the first user terminal 300 is transmitted and stored in the electronic shelf label 100 in step S103, pairing between the second user terminal 300 and the electronic shelf label 100 can be blocked, or reception of the second customer code of the second user terminal 300 by the electronic shelf label 100 can blocked, thereby fundamentally blocking editing of product-related information by the second user terminal 300.

In step S105 in which the first user terminal 300 receives a first user input, the input module 24 of the first user terminal 300 may receive the first user input for editing the product-related information displayed on the electronic shelf label 100.

The user may edit product-related information to be displayed on the electronic shelf label 100 in a product-related information editing environment provided by the product-related information editing application installed in the first user terminal 300.

For example, a template to which product-related information can be input, provided from the template database 16 of the server 200, may be displayed on the first user terminal 300 through the product-related information editing application.

For example, referring to FIG. 7 and FIG. 8, step S105 may include step S1051 in which the first user terminal 300 displays a template editing UI UI1, and a step S1053 in which the first user terminal 300 receives the first user input through the template editing UI UI1 and applies information according to the first user input to the template editing UI UI1.

Referring to FIG. 8, in step S1051 in which the first user terminal 300 displays the template editing UI UI1, the template editing UI UI1 that receives a user input for changing product-related information may be displayed through the display module 25 of the first user terminal 300.

The template editing UI UI1 may include a basic template T1 to which product information data can be applied. The basic template T1 may be a template to which product information data has not yet been input. Additionally, the template editing UI UI1 may include an editing board EB where a user can input changes to product information data. Here, the product information data may include product-related information such as a Korean product name, English product name, country of origin, price, raw materials, and weight/calories.

The editing board EB may be configured to allow changes to product-related information such as a product name, product sub-name, product discount rate, price, and discount price. For example, the user may input desired product information data to the editing board EB using the input module 24 of the first user terminal 300.

In step S1053 in which the first user terminal 300 applies information according to the first user input to the template editing UI UI1, the user can input desired product information data to the editing board EB. The product information data input to the editing board EB may be applied to the basic template T1, and accordingly, a modified template T2 displaying the product information data can be generated as illustrated in FIG. 8.

In step S107 in which data regarding product-related information modified according to the first user input is transmitted to the electronic shelf label 100, product-related information data modified to correspond to the first user input may be transmitted from the first user terminal 300 to the electronic shelf label 100.

For example, data regarding product-related information may be transmitted from the first user terminal 300 to the electronic shelf label 100 according to a user input via the first button 1 and/or the second button 2 included in the electronic shelf label 100.

In this case, referring to FIG. 9, after product-related information editing is completed using the product-related information editing application provided by the first user terminal 300, when the user presses the first button 1 and/or the second button 2 included in the electronic shelf label 100, data regarding the product-related information may be transmitted from the first user terminal 300 to the electronic shelf label 100.

In this manner, in a state where the first customer code of the first user terminal 300 paired with the electronic shelf label 100 is stored in the electronic shelf label 100, and editing of the product-related information through the first user terminal 300 is completed, the modified product-related information can be transmitted to the electronic shelf label 100 through a simple operation performed on the first button 1 and/or the second button 2 included in the electronic shelf label 100.

For example, in step S105, data of the modified template T2 generated through the template editing UI UI1 can be transmitted from the first user terminal 300 to the electronic shelf label 100 according to a user input through the first button 1 and/or the second button 2 included in the electronic shelf label 100.

The electronic shelf label 100 may display, in the display area DA, the product-related information modified according to the user input based on the data regarding the product-related information received from the first user terminal 300 to provide the information to the user.

Meanwhile, referring to FIG. 9, after the first customer code of the first user terminal 300 is transmitted to the electronic shelf label 100, data regarding product-related information modified according to a second user input received by the second user terminal 400 different from the first user terminal 300 may be blocked from being received by the electronic shelf label 100.

As described above, when the first customer code of the first user terminal 300 is stored in the electronic shelf label 100, pairing of the second user terminal 400 with the electronic shelf label 100 can be blocked, and reception of data regarding product-related information modified through the second user terminal 400 by the electronic shelf label 100 can also be blocked, thereby preventing product information editing by the second user terminal 400 different from the first user terminal 300.

After editing the product-related information through the first user terminal 300, a situation in which pairing between the first user terminal 300 and the electronic shelf label 100 needs to be canceled may occur. In this case, pairing between the first user terminal 300 and the electronic shelf label 100 may be canceled through a user input to the first user terminal 300.

For example, the method S100 may further include a step in which the electronic shelf label 100 receives a pairing cancelation signal for canceling pairing between the first user terminal 300 and the electronic shelf label 100 and a step of deleting the first customer code from the electronic shelf label 100.

Referring to FIG. 10, in the step in which the electronic shelf label 100 receives the pairing cancelation signal in the method S100, a user input interface for canceling pairing of the electronic shelf label 100 is displayed on the first user terminal 300, and pairing between the first user terminal 300 and the electronic shelf label 100 may be canceled according to a user input through the user input interface for pairing cancelation.

For example, referring to FIG. 10, the user input interface for canceling pairing between the first user terminal 300 and the electronic shelf label 100 may include electronic shelf label deletion bars EB1 to EB6 configured to receive a deletion input for the electronic shelf label 100 paired with the first user terminal 300 and an electronic shelf label search window S1 through which the type of the electronic shelf label 100 paired with the first user terminal 300 can be searched.

For example, the first user terminal 300 may be paired with a plurality of electronic shelf labels, including a first electronic shelf label ESL1, a second electronic shelf label ESL2, a third electronic shelf label ESL3, a fourth electronic shelf label ESL4, a fifth electronic shelf label ESL5, and a sixth electronic shelf label ESL6, and the user input interface for pairing cancelation displayed on the first user terminal 300 may include an electronic shelf label list EL including a plurality of electronic shelf label deletion bars EB1 to EB6 configured to receive a deletion input for the plurality of electronic shelf labels.

For example, when the user clicks on the first electronic shelf label deletion bar EB1 displayed on the first user terminal 300, pairing between the first user terminal 300 and the first electronic shelf label ESL 1 can be canceled.

Similarly, when the user clicks on any one of the electronic shelf label deletion bars EB1 to EB6 displayed on the first user terminal 300, pairing between the first user terminal and the electronic shelf label corresponding to the clicked electronic shelf label deletion bar among the electronic shelf labels ESL1 to ESL6 paired with the first user terminal 300 can be canceled.

In the step of deleting the first customer code in the electronic shelf label 100 in the method S100, when pairing between the electronic shelf label 100 and the first user terminal 300 is canceled, the first customer code stored in the electronic shelf label 100 may be automatically deleted. Accordingly, editing of the product-related information displayed on the electronic shelf label 100 through the first user terminal 300 may be blocked.

In this manner, after the first customer code of the first user terminal 300 is deleted from the electronic shelf label 100, pairing of the second user terminal 400 with the electronic shelf label 100 can be performed, and accordingly, editing of product-related information by the second user terminal 400 can be enabled.

For example, the method S100 may further include a step of pairing the second user terminal 400 and the electronic shelf label 100 after the first customer code is deleted from the electronic shelf label 100, a step of transmitting a unique second customer code of the second user terminal 400 from the second user terminal 400 to the electronic shelf label 100, a step of receiving a second user input for the second user terminal 400 to edit product-related information, and a step of transmitting data regarding product-related information modified according to the second user input from the second user terminal 400 to the electronic shelf label 100 paired with the second user terminal 400.

In this case, referring to FIG. 11, a pairing signal may be transmitted from the electronic shelf label 100 to the second user terminal 400, and the second customer code of the second user terminal 400 may be transmitted from the second user terminal 400 to the electronic shelf label 100.

The method by which product-related information is modified by the second user terminal 400 after the second user terminal 400 is paired with the electronic shelf label 100 and the second customer code of the second user terminal 400 is stored in the electronic shelf label 100 is substantially the same as that described with reference to FIG. 5 to FIG. 9, and therefore, a description thereof will be omitted.

Meanwhile, referring to FIG. 12, the first user terminal 300 and a plurality of electronic shelf labels 101, 103, 105, and 107 are paired, and the first customer code of the first user terminal 300 may be transmitted to the plurality of electronic shelf labels 101, 103, 105, and 107.

In this case, in step S101 of the method S100, the first user terminal 300 may be paired to each of the plurality of electronic shelf labels 101, 103, 105, and 107 including the first electronic shelf label 101 and the second electronic shelf label 103 which are different.

Additionally, in step S103, the first customer code may be transmitted from the first user terminal 300 to the plurality of electronic shelf labels 101, 103, 105, and 107 including the first electronic shelf label 101 and the second electronic shelf label 103.

In addition, in step S105, a (1-1)-th user input for editing information related to a first product assigned to the first electronic shelf label 101 and a (1-2)-th user input for editing information related to a second product different from the first product and assigned to the second electronic shelf label 103 may be received. Similarly, in step S105, a (1-3)-th user input for editing information related to a third product different from the first and second products and assigned to the third electronic shelf label 105 and a (1-4)-th user input for editing information related to a fourth product different from the first to third products and assigned to the fourth electronic shelf label 107 may be received.

In addition, in step S107, referring to FIG. 13, data regarding information related to the first product modified according to the (1-1)-th user input from the first user terminal 300 may be transmitted to the first electronic shelf label 101, and data regarding information related to the second product modified according to the (1-2)-th user input may be transmitted to the second electronic shelf label 103. Similarly, in step S107, data regarding information related to the third product modified according to the (1-3)-th user input from the first user terminal 300 may be transmitted to the third electronic shelf label 105, and data regarding information related to the fourth product modified according to the (1-4)-th user input may be transmitted to the fourth electronic shelf label 107.

In this case, the data regarding the information related to the first product may be transmitted from the first user terminal 300 to the first electronic shelf label 101 according to user input through a button of the first electronic shelf label 101, and the data regarding the information related to the second product may be transmitted from the first user terminal 300 to the second electronic shelf label 103 according to user input through a button of the second electronic shelf label 103. Similarly, the data regarding the information related to the third product may be transmitted from the first user terminal 300 to the third electronic shelf label 105 according to user input through a button of the third electronic shelf label 105, and the data regarding the information related to the Fourth product may be transmitted from the first user terminal 300 to the fourth electronic shelf label 107 according to user input through a button of the fourth electronic shelf label 107.

The embodiments of the present disclosure described above may be implemented in the form of program instructions that can be executed by various computer components and recorded on a computer-readable recording medium. The computer-readable recording medium may include program instructions, data files, data structures, etc., either singly or in combination. The program instructions recorded on the computer-readable recording medium may be specially designed and configured for the present disclosure or may be known and available to those skilled in the art of computer software. Examples of computer-readable recording media include magnetic media such as hard disks, floppy disks, and magnetic tapes, optical recording media such as CD-ROMs and DVDs, magneto-optical media such as floptical disks, and hardware devices specifically configured to store and execute program instructions, such as ROMs, RAMs, and flash memories. Examples of program instructions include not only machine language codes generated by a compiler, but also high-level language codes that can be executed by a computer using an interpreter, etc. Hardware devices may be modified into one or more software modules to perform processing according to the present disclosure, and vice versa.

The specific implementations described in the present disclosure are exemplary embodiments and do not limit the scope of the present disclosure. For the sake of brevity, descriptions of conventional electronic components, control systems, software, and other functional aspects of the systems may be omitted. In addition, lines connecting or connecting members between components illustrated in the drawings are merely representative of functional connections and/or physical or circuit connections, and may be replaced or represented as various additional functional connections, physical connections, or circuit connections in an actual device. In addition, unless specifically mentioned as "essential," "important," etc., a component may not be absolutely necessary for the application of the present disclosure.

Although the present disclosure has been described in detail with reference to preferred embodiments of the present disclosure, it will be understood by those skilled in the art or having ordinary knowledge in the art that various modifications and changes can be made to the present disclosure without departing from the spirit and technical scope of the present disclosure as set forth in the claims below. Accordingly, the technical scope of the present disclosure should not be limited to the contents described in the detailed description of the specification, but should be defined by the claims.

### [Industrial Applicability]

The present disclosure is industrial applicable in that it provides an environment in which only authorized users can edit product information to be displayed on an electronic shelf label by authorizing only a user terminal that has provided a customer code to an electronic shelf label from among a plurality of user terminals to edit product information and not authorizing a user terminal that has not provided a customer code to an electronic shelf label, thereby enhancing security in electronic shelf label management.

## Claims

1. A method for editing product-related information displayed on an electronic shelf label, comprising:
pairing a first user terminal with an electronic shelf label;
transmitting a unique first customer code of the first user terminal to the electronic shelf label;
receiving a first user input for editing product-related information by the first user terminal; and
transmitting data regarding the product-related information modified according to the first user input from the first user terminal to the electronic shelf label paired with the first user terminal.

2. The method of claim 1, wherein, pairing of a second user terminal different from the first user terminal with the electronic shelf label is blocked after the first customer code of the first user terminal is transmitted to the electronic shelf label.

3. The method of claim 1, wherein, reception of a unique second customer code of the second user terminal different from the first user terminal by the electronic shelf label is blocked after the first customer code of the first user terminal is transmitted to the electronic shelf label,.

4. The method of claim 1, wherein, data regarding product-related information modified according to a second user input received by the second user terminal different from the first user terminal is blocked from being received by the electronic shelf label after the first customer code of the first user terminal is transmitted to the electronic shelf label.

5. The method of any one of claims 2 to 4, further comprising:
receiving, by the electronic shelf label, a pairing cancelation signal for canceling pairing with the electronic shelf label from the first user terminal; and
deleting the first customer code from the electronic shelf label.

6. The method of claim 5, further comprising:
pairing the second user terminal with the electronic shelf label after the first customer code is deleted from the electronic shelf label;
transmitting a unique second customer code of the second user terminal to the electronic shelf label from the second user terminal;
receiving a second user input for editing product-related information by the second user terminal; and
transmitting data regarding the product-related information modified according to the second user input from the second user terminal to the electronic shelf label paired with the second user terminal.

7. The method of claim 1, wherein the transmitting data regarding the product-related information modified according to the first user input to the electronic shelf label comprises transmitting the data regarding the product-related information from the first user terminal to the electronic shelf label according to a user input through a button on the electronic shelf label.

8. The method of claim 1, wherein the receiving a first user input by the first user terminal comprises:
displaying a template editing UI by the first user terminal; and
receiving the first user input through the template editing UI by the first user terminal and applying information according to the first user input to the template editing UI.

9. The method of claim 1, wherein the pairing a first user terminal with an electronic shelf label comprises pairing the first user terminal with different first and second electronic shelf labels, respectively, and the transmitting a first customer code from the first user terminal to the electronic shelf label comprises transmitting the first customer code from the first user terminal to the first and second electronic shelf labels.

10. The method of claim 9, wherein the receiving a first user input by the first user terminal comprises receiving a (1-1)-th user input for editing information related to a first product assigned to the first electronic shelf label and a (1-2)-th user input for editing information related to a second product different from the first product and assigned to the second electronic shelf label.

11. The method of claim 10, wherein the transmitting product-related information modified according to the first user input to the electronic shelf label comprises transmitting data regarding information related to the first product modified according to the (1-1)-th user input from the first user terminal to the first electronic shelf label, and transmitting data regarding information related to the second product modified according to the (1-2)-th user input to the second electronic shelf label.

12. The method of claim 11, wherein the transmitting data regarding product-related information modified according to the first user input to the electronic shelf label comprises:
transmitting the data regarding the information related to the first product from the first user terminal to the first electronic shelf label according to a user input through a button on the first electronic shelf label; and
transmitting the data regarding the information related to the second product from the first user terminal to the second electronic shelf label according to a user input through a button on the second electronic shelf label.

13. A system for editing product-related information displayed on an electronic shelf label, the system comprising:
an electronic shelf label provided on a shelf on which products are displayed and including a button; and
a first user terminal including a memory in which a program for performing a method for editing product-related information displayed on the electronic shelf label is stored and a processor for executing the program,
the method for editing product-related information displayed on the electronic shelf label comprising:
pairing the first user terminal with the electronic shelf label;
transmitting a unique first customer code of the first user terminal to the electronic shelf label from the first user terminal;
receiving a first user input for editing product-related information by the first user terminal; and
transmitting data regarding product-related information modified according to the first user input from the first user terminal to the electronic shelf label paired with the first user terminal.

14. The system of claim 13, wherein, after the first customer code of the first user terminal is transmitted to the electronic shelf label, pairing of a second user terminal different from the first user terminal with the electronic shelf label is blocked, a unique second customer code of the second user terminal is blocked from being received by the electronic shelf label, or data regarding product-related information modified according to a second user input received by the second user terminal is blocked from being received by the electronic shelf label.

15. A user terminal for editing product-related information displayed on an electronic shelf label, the user terminal comprising:
a memory in which a program for performing a method for editing product-related information displayed on an electronic shelf label is stored; and
a processor for executing the program,
the method for editing product-related information displayed on an electronic shelf label comprising:
pairing the user terminal with the electronic shelf label;
transmitting a unique customer code of the user terminal from the user terminal to the electronic shelf label;
receiving a user input for editing product-related information by the user terminal; and transmitting data regarding product-related information modified according to the user input from the user terminal to the electronic shelf label paired with the user terminal.
